# EUROPEAN PATENT APPLICATION

(11) **EP 1 369 735 A1**
(43) Date of publication of application: **10.12.2003**
(21) Application number: 02012741.1
(22) Date of filing: 07.06.2002
(51) Int. Cl.: G02B 27/28

(54) **A polarizing beam splitter**

(71) Applicant: Chromagic Technologies Corporation, Taoyuan Hsian (TW)
(72) Inventor: Mao, Chien-Chung, Taoyuan, Hsien (TW)
(74) Representative: Viering, Jentschura & Partner

(57) **Abstract**

A polarizing beam splitter (2) comprises essentially a ladder-like light resolving prism unit (21) that is provided with an anti-reflective coating on the outer surface thereof to decrease the reflection of light and increase the transmission of light; and that is provided also a polarizing beam splitting film (23) therein such that as a large amount of light enters said polarizing beam splitter, is can be processed simultaneously by means of the multiple ladder surfaces on the light resolving prism unit, and subsequently split by said polarizing beam splitting film into a P polarized beam and an S polarized beam, thereby incresing the utilizing efficacy of a polarizing beam.

## Description

### BACKGROUND OF THE INVENTION

### 1. Field of the invention

The invention relates to a polarizing bean splitter (PBS), and particularly, to a polarizing bean splitter having a ladder-like profile, characterized in that it can improve bean-splitting efficiency to yield a polarizing bean of high quality useful for optical devices.

### 2. Description of the prior art

As used herein, a polarizing bean splitter is an optical device that reorganizes efficiently polarized beam for being reused further. A polarizing bean splitter is used predominantly on a projecting structure of liquid crystal type. A light beam must be polarized and resolved into three primary color through a bean splitting system before entering a liquid crystal displaying panel (LCD panel), where every color beam is reorganized respectively and then mixed and projected. However, during passing through lens or reflector, a polarized beam may be attenuated due to being absorbed readily, resulting into a low utilizing efficiency such that an excellent projecting display could not be expected. Therefore, most of current optical devices are provided with a polarizing beam splitter on the upstream of an imaging system such that the light efficiency can be improved and the displaying effect of the projector can be increased.

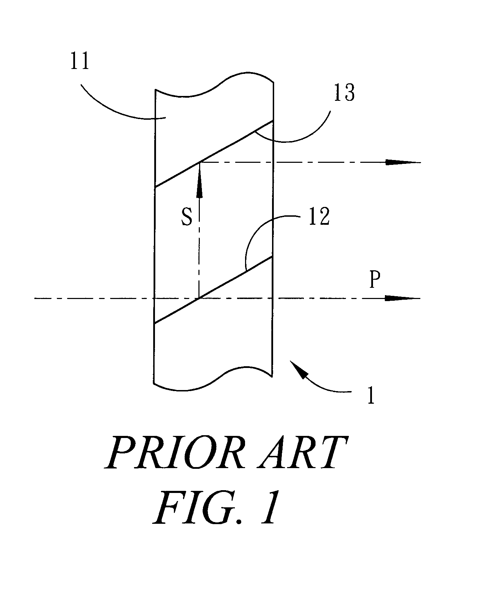

Figure 1 illustrates the principle of a conventional polarizing beam splitter 1, which comprises a polarized beam resolving prism 11 having an Single cubic structure and being provided therein with a polarizing beam splitting film 12. as light entering the polarized beam resolving prism, it will be resolved appropriately into a P polarized beam and an S polarized beam, and of which, the P polarized beam can penetrate directly through the polarizing beam splitting film 12 and emit on the other side, while the S polarized beam is rotated by the polarizing beam splitting film 12 and emit in a different direction. In addition, a reflecting film 13 is provided along the direction of the S polarized beam, which acts to direct the S polarized beam such that the S polarized beam can emit along the same direction of the P polarized beam and hence loss of light can be avoided and efficiency improved.

Although the conventional polarizing beam splitter has provide a way for improving efficiency of using light, its efficacy of reorganizing a polarized beam is limited due to the fact that the light resolving prism 11 provided therein is only an Single cubic structure. Enlarging the dimension of the light resolving prism 11 is difficult and expensive, thereby the production of the liquid crystal projector will be negatively affected.

In view of these, the conventional polarizing beam splitter has disadvantage to be solved and not a perfect structure.

### SUMMARY OF THE INVENTION

Accordingly, one object of the invention is to provide a novel polarized beam splitter by replacing a ladder-like light resolving prism unit instead of an Single cubic structure used in conventional polarizing beam splitter, such that, large amount of light can be processed simultaneously by means of the multiple ladder surface on the light resolving prism unit, thereby the splitting and integrating efficiency of the polarized beam can be improved, the intensity of emitting light can be increased greatly, and hence results in a better displaying effect of a projector.

Another object of the invention is to provide a novel polarized beam splitter characterized in that, by a novel distribution manner thereof, a maximum light processing arrangement can be obtained in a limited space such that it is suitable for a projector of increasing compactness.

A polarized beam splitter that can accomplish the above-described objects comprises essentially a ladder-like light resolving prism unit which is provided with an anti-reflective coating thereon to decrease the reflection of light and increase the transmission of light; and with a polarizing beam splitting film therein to split the incident light into a transmitted P polarized beam and a reflected S polarized beam that can be processed simultaneously by the multiple ladder-like surfaces, thereby improving the utilizing efficacy of a polarized beam.

### BRIEF DESCRIPTION OF THE DRAWINGS

The drawings disclose an illustrative embodiment of the present invention which serves to exemplify the various advantages and objects hereof, and are as follows:
Figure 1 is a diagram illustrating the principle of a conventional polarizing beam splitter;
Figure 2 is an Schematic view showing the structure of a polarizing beam splitter according to the invention; and
Figure 3 is a diagram illustrating the state in use of the polarizing beam splitter according to the invention.

### DETAILED DESCRIPTION OF THE PREFERRED EMBODIMENT

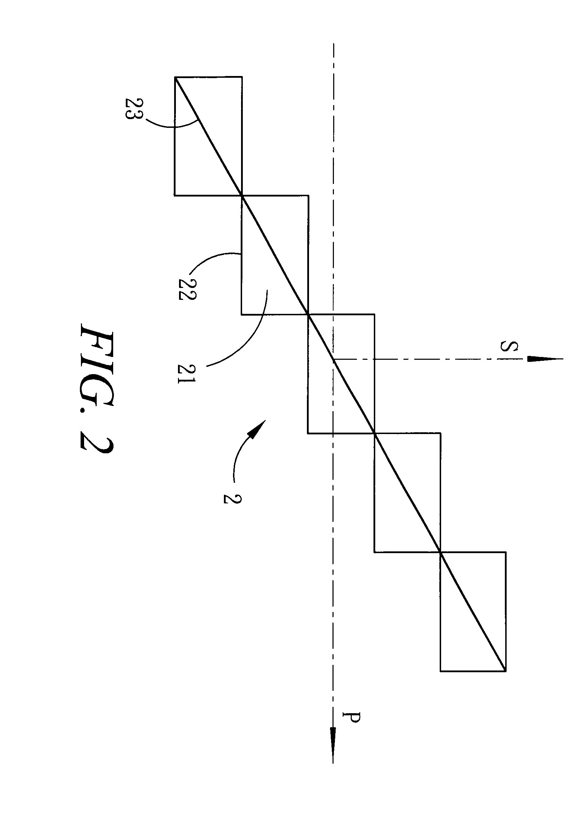

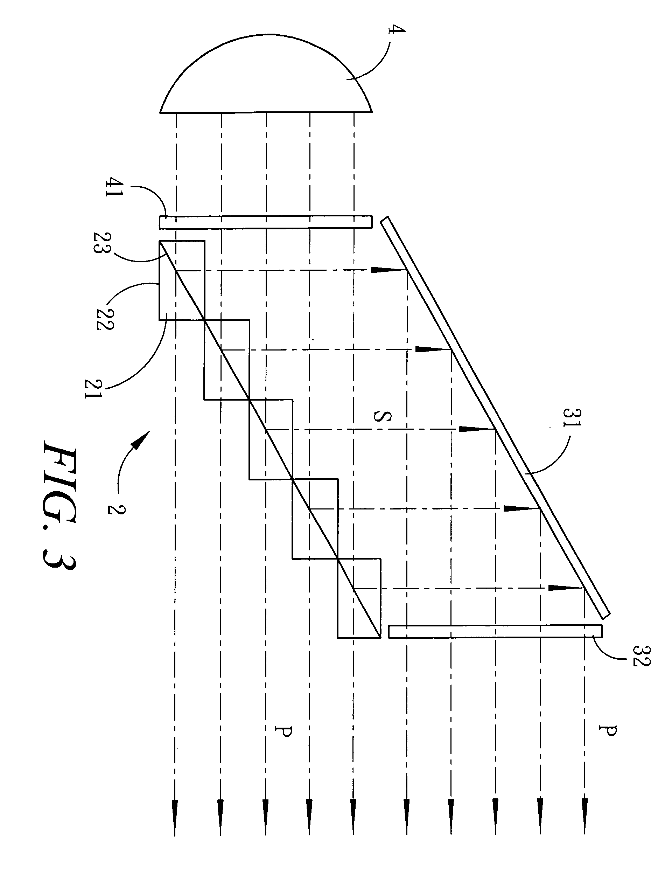

Referring to Fig. 2 and 3, the polarizing beam splitter 2 according to the invention comprises essentially a ladder-like light resolving prism unit 21, which is designed in a configuration that the surface of every ladder can process a polarizing beam independently and that light processed by multiple surfaces of the ladder-like light resolving prism unit 21 can be integrated so as to increase the effect of light polarizing; said light resolving prism unit 21 exhibits a good light transmission capability; on the outer surface of the light resolving prism unit 21, is plated an anti-reflective coating 22 (AR coating) that can decrease light reflectivity and increase light transmission; in the ladder-like light resolving prism unit 21, a polarizing beam splitting film (PBS film) 23 is provided to split the incident light into a transmitted P polarized beam and an S polarized beam and thus accomplish the function of the splitting of polarizing beam; a reflecting mirror 31 is provided in the direction of the S polarized beam emitting out of said polarizing beam splitting film 23; and a polarizing beam converter 32 is provided in the reflecting direction of said reflecting mirror 31 to converting said S polarized beam into a P polarized beam.

By means of the above device, in the practical use of the polarizing beam splitter according to the invention, a light source 4 is provided to emit light into a filter 41 where infrared or ultraviolet light is filtered to purify the incident light. Then, the filtered light transmits said polarizing beam splitter 2, and is processed by the multiple ladder surface of said light resolving prism unit 21. Thereafter, the light is split by the polarizing beam splitting film 23 into a P polarized beam and an S polarized beam. The P polarized beam transmits directly through said polarizing beam splitting film 23, while the S polarized beam is reflected by the reflecting mirror 31 and turned into the same direction as the P polarized beam and then is converted into P polarized beam by said polarized beam converter 32. Thus, light efficiency and also the light intensity can be greatly increased after being processed by the polarizing beam splitter 2 according to the invention to facilitate the subsequent operation.

The polarizing beam splitter provided by the invention processes light essentially by means of a ladder-like light resolving prism unit that can increase the area for light processing by virtue of the multiple ladder surfaces provided on the multiple ladder. Further, since the P polarized beam and the S polarized beam do not interference each other during light splitting on each ladder surface, its effect can be functioned smoothly. Accordingly, the invention can arrange a number of prism in a limited space to meet the requirement of increasing compactness on the optical product.

Many changes and modifications in the above described embodiment of the invention can, of course, be carried out without departing from the scope thereof. Accordingly, to promote the progress in the science and the useful arts, the invention is disclosed and is intended to be limited only by the scope of the appended invention.

## Claims

1. A polarizing beam splitter, comprises:
a ladder-like light resolving prism unit, having good light transmittance, and being provided with a polarizing beam splitting film therein to split the incident light into a transmitted P polarized beam and a reflected S polarized beam.

2. A polarizing beam splitter as recited in claim 1, wherein an anti-reflective coating is provided on the outer surface of said light resolving prism unit to decrease the reflection of light and increase the transmission of light.

3. A polarizing beam splitter as recited in claim 1, wherein a reflecting mirror is provided in the direction of said S polarized beam emitted from said polarizing beam splitting film and wherein a polarized beam converter is provided in the reflection direction of said reflecting mirror to convert said S polarized beam into a P polarized beam.
